# EUROPÄISCHE PATENTANMELDUNG

(11) **EP 2 113 294 A1**
(43) Veröffentlichungstag der Anmeldung: **04.11.2009**
(21) Anmeldenummer: 08103779.8
(22) Anmeldetag: 30.04.2008
(51) Int. Cl.: B01D 27/14, B01D 37/02

(54) **Filtermodul, Filtervorrichtung und Verwendung eines Filtermoduls**

(71) Anmelder: Filtrox AG, 9000 St. Gallen (CH)
(72) Erfinder: Loser, Werner, 9242, Oberuzwil (CH); Zuber, Jürg, 9240, Uzwil (CH); Ebert, Jürgen, 9500, Wil (CH)
(74) Vertreter: Müller, Christoph Emanuel

(57) **Zusammenfassung**

Filtermodul (1) für den Einmalgebrauch mit einer verschlossenen Hülle (3) als Filtergehäuse (2) und mindestens einer ersten Öffnung (8) durch die Hülle (3) zu einem Unfiltratraum (9), mindestens einer zweiten Öffnung (10) zum Ableiten des Filtrates durch die Hülle (3) und einem oder mehreren in der Hülle (3) untergebrachten und mit der zweiten Öffnung (10) verbundenen, scheibenförmigen Filterelementen (14).

## Beschreibung

Die vorliegende Erfindung liegt auf dem Gebiet der Filtrationstechnik. Sie betrifft insbesondere ein Filtermodul, eine Filtervorrichtung, sowie die Verwendung eines Filtermoduls mit den Merkmalen des Oberbegriffs der unabhängigen Patentansprüche.

Insbesondere in der chemischen, pharmazeutischen und biotechnischen Industrie hat sich in letzter Zeit ein Trend dahin entwickelt, dass alle Prozessschritte in so genannten "disposables", also Wegwerfprodukten ausgeführt werden. Dadurch entfällt die kostspielige und aufwendige Reinigung, sowie deren Validierung und die Gefahr einer Kreuzkontamination wird verringert.

Im Stand der Technik sind Wegwerffilter bekannt.

US7081201 beschreibt beispielsweise eine Einwegfilterkassette mit Anschlüssen zum lösbaren Verbinden mit einer Fluidquelle. Die Filterkassette beinhaltet ein Filterelement in einem verschlossenen Gehäuse, wobei das Filterelement aus einem Karbonblockfilterelement und einem mikroporöses Filterelement besteht.

In US4501663 wird eine Wegwerffilterkassette offenbart, welche in einem starren Gehäuse mehrere scheibenförmige Membran-Filterelemente enthält. Dabei beinhalten die Filterelemente eine Supportstruktur, welche durch ein Lösungsmittel angelöst und mit der porösen Filtermembran so verbunden wird, dass die Filtermembrane an der Supportstruktur fixiert ist. Das Gehäuse ist aus mehreren Kunststoffteilen gefertigt und verschweisst.

US5965019 beschreibt eine Filterkassette mit Filterelementen, welche im Gehäuse durch einen zentralen Montagepfosten in Position gehalten werden. Der Montagepfosten wird bei der Montage mit einer Rückhaltevorrichtung in den Filtratauslauf des Gehäuses der Filterkassette gesteckt, wobei sich die Rückhaltevorrichtung an einer, im Filtratauslauf befestigten, umlaufenden Rippe festkrallt. Das Gehäuse ist aus mehreren Kunststoffteilen gefertigt und verschweisst.

US6602413 zeigt eine Zentrifuge welche mit einem sterilen Wegwerfbehälter ausgekleidet ist, so dass eine nachträgliche Reinigung der Zentrifuge entfällt. Optional kann der Wegwerfbehälter einen Filter beinhalten, mittels welchem die Flüssigkeit beim Austrag zusätzlich gereinigt wird.

In EP0557295 wird ein Einwegfilter beschrieben, welcher ein flexibles Gehäuse aufweist. In diesem Gehäuse sind quer zur Flussrichtung Filterelemente eingebracht. Der Einwegfilter kann vor und nach Gebrauch flach zusammengelegt werden.

EP0804366 beschreibt ein hygienisches Filter, welches in einem mit einer Flüssigkeit gefüllten flexiblen Gehäuse eingeschlossen ist. Der Filter ist dabei im Beutel komplett mit Wasser überdeckt, sodass ein Austrocknen der Filterschicht verhindert wird. Das Gehäuse verfügt über Anschlüsse zum Anbinden an eine Fluidquelle und einen Filtratempfänger.

JP2004136247 beschreibt eine Wegwerffilterkartusche mit einem flexiblen Gehäuse, welches die gefilterte Flüssigkeit vor Verschmutzung, Verfärbung und Korrosion des äusseren Gehäuses schützt. Gleichzeitig wird das äussere Gehäuse vor Verschmutzungen geschützt.

Alle vorgängig beschriebenen Filterkartuschen oder Filtermodule haben gemeinsam, dass ihre Filterfläche sehr begrenzt ist und dadurch nur eine ungenügende Filtrationsleistung erreicht werden kann.

In EP1464373 wird ein Filtermodul beschrieben, welches eine Mehrzahl von stapelförmig aufeinander gesetzten Filterelementen enthält. Diese Filterelemente weisen Filtermedien auf, welche den Filtratraum von einem Unfiltratraum trennen. Durch die Parallelschaltung von mehreren solchen Filterelementen kann die Filterfläche und dadurch der Durchfluss durch den Filter erhöht werden. Als nachteilig hat sich vor allem in der chemischen, pharmazeutischen und biotechnologischen Industrie gezeigt, dass solche zu Filterelementgruppen zusammengesetzten Filterelemente für ihren Betrieb in ein Filtergehäuse eingesetzt werden müssen und das Filtergehäuse nach einem Produktionsdurchlauf aufwendig gereinigt werden muss.

Wie vorgängig gezeigt, sind bis anhin nur Einwegfilter für kleine Produktionslose bekannt.

Es ist also eine Aufgabe der Erfindung die Nachteile des Bekannten zu vermeiden, insbesondere einen Filter, für den einmaligen Gebrauch, eine Filtervorrichtung und die Verwendung eines Filtermoduls mit grosser Durchflussrate und trotzdem guter Filterwirkung für eine längere Einsatzdauer zur Verfügung zu stellen.

Die Aufgabe wird durch ein Filtermodul, für den Einmalgebrauch, eine Filtervorrichtung und die Verwendung eines Filtermoduls gemäss den unabhängigen Ansprüchen gelöst.

Das erfindungsgemässe Filtermodul für den Einweggebrauch enthält eine verschlossene Hülle als Filtergehäuse mit einem Unfiltratraum innerhalb der verschlossenen Hülle, und mindestens einer ersten Öffnung durch diese Hülle zum Unfiltratraum, mindestens eine zweite Öffnung zum Ableiten des Filtrates durch die Hülle und ein oder mehrere in der Hülle untergebrachte scheibenförmige Filterelemente, deren Innenraum mit der zweiten Öffnung (10) verbundenen ist. Die Filterelemente sind dabei als Anschwemmfilter ausgebildet und weisen einen Anschwemmraum zwischen den einzelnen Filterelementen bzw. zwischen dem Filterelement und der Hülle auf. Dieser Anschwemmraum dient zum Aufbau eines Anschwemmfilterkuchens bei der Anschwemmfiltration.

Unter Anschwemmfiltration wird im Wesentlichen verstanden, dass ein Filterhilfsmittel, beispielsweise Kieselguhr, welches eine poröse Filterschicht bildet, auf einem Trägermaterial vor oder während der Filtration angeschwemmt wird. Hierzu kann vor der eigentlichen Filtration das Filterhilfsmittel mit einem separaten Fluid oder mit dem zu filtrierenden Fluid in einer Anschwemmphase eingebracht werden. Optional kann das Filterhilfsmittel auch während der gesamten Filtration mit dem zu filtrierenden Fluid weiter eingebracht werden, so dass der Anschwemmfilterkuchen ständig wächst. Somit kann verhindert werden, dass die poröse Filterschicht durch Schmutzstoffe verstopft und dadurch die Durchflussrate abnimmt.

Die Filterhülle kann wenigstens teilweise flexibel, vorzugsweise dehnbar sein. Unter flexibel wird in diesem Zusammenhang verstanden, dass sich ein Bauteil ähnlich einer dünnen Kunststofffolie leicht von Hand biegen und falten lässt, ohne dass es dadurch zum Bruch kommt. Eine flexible Hülle lässt sich bei NichtGebrauch des Filtermoduls problemlos an die Filterelemente falten und anlegen, so dass die Aussenabmessung des Filtermoduls den Aussenabmessungen der eingeschlossenen Filterelemente entspricht. Unter Betriebsdruck und in einem dimensionsbegrenzenden Rahmen wird die Hülle auf die Innenmasse dieses Rahmens aufgefüllt.

Unter dehnbar wird in diesem Dokument verstanden, dass sich das entsprechende Bauteil unter Zug dehnen lässt, d.h. seine Längenausdehnung verändert. Dabei beträgt die Bruchdehnung des Hüllenmaterials mindestens 10%, vorzugsweise mindestens 20% oder mehr. Eine dehnbare Hülle lässt sich unabhängig von ihrer Form bei Druckbelastung mit dem Betriebsdruck gleichmässig ausdehnen und legt sich von innen an einen dimensionsbegrenzenden Rahmen zur Aufnahme des Filtermoduls an.

Durch einen Aufbau mit Kunststoff wird eine kostengünstige Produktion ermöglicht. Des Weiteren ist auch eine Gewichtsersparnis gegenüber einer herkömmlichen Metallkonstruktion möglich, was sich insbesondere beim Transport und dem Gebrauch der Filtermodule positiv auswirkt.

In einer alternativen erfindungsgemässen Ausführungsform, welche für sich alleine oder aber in Kombination mit der vorgängig geschilderten Ausführungsform betrachtet werden kann, besteht das Filtermodul für den Einmalgebrauch aus einer verschlossenen Hülle als Filtergehäuse mit einem Unfiltratraum innerhalb der verschlossenen Hülle, und mindestens einer ersten Öffnung durch die Hülle zum Unfiltratraum, mindestens einer zweiten Öffnung zum Ableiten des Filtrates durch die Hülle und aus mehreren in der Hülle untergebrachten scheibenförmigen Filterelementen, deren Innenraum mit der zweiten Öffnung verbundenen ist, wobei die Hülle wenigstens teilweise flexibel, vorzugsweise dehnbar ist.

Eine flexible Ausgestaltung kann beispielsweise durch eine geeignete Materialwahl und/oder durch eine Reduktion der Wandstärke der Hülle erreicht werden, was sich positiv auf den Materialverbrauch bei der Herstellung niederschlägt. Durch eine geeignete Wahl der Materialien kann sogar eine dehnbare Hülle realisiert werden, welche beispielsweise Druckunterschiede in der Filtrationsanordnung aufnehmen und ausgleichen kann. Dabei beträgt der Betriebsdruck für die Filtration 0.5 bis 8 bar, vorzugsweise 1 bis 3 bar. Bei einer dehnbaren Hülle muss die maximale Ausdehnung durch eine umliegende Struktur auf einen Wert unterhalb der Bruchdehnung, vorzugsweise unterhalb der Elastizitätsgrenze eingeschränkt werden. Ein zylinderförmiger Rahmen zur Aufnahme eines Filtermoduls mit einer flexiblen Hülle ist beispielsweise so dimensioniert, dass sein Innendurchmesser maximal 50%, vorzugsweise zwischen 5% und 20% gösser als der Durchmesser der scheibenförmigen Filterelemente des Filtermoduls ist. Dabei weist die Hülle eine Wandstärke von 10µm bis 1000µm, vorzugsweise von 100µm bis 500µm, besonders bevorzugt von 200µm bis 250µm auf.

Die Hülle kann beispielsweise aus mindestens einer Kunststoffschicht, vorzugsweise aus Polyethylen (PE) aufgebaut sein oder beispielsweise ganz aus Kunststoff bestehen. Mögliche Kunststoffschichten bestehen beispielsweise aus Polypropylen (PP), Polyamid (PA), [Ethylenvinylalkohol]-Copolymer (EVOH), Polysulfon (PSU), Polyethylenterephthalat (PET), Ethylenvinylacetat (EVA), Polycarbonat (PC), Polyvinylidenchlorid (PVdC), Polyolefin und/oder Polyvinylchlorid (PVC). Durch den Einsatz von Kunststoff als Material für die Hülle des Filtermoduls werden besonders effiziente Herstellungsmethoden wie beispielsweise Spritzguss, Extrusion, Tiefziehen, usw. ermöglicht, was zu einer Kostenreduktion beim einmaligen Gebrauch führt. Des Weiteren sind andere Materialien oder Materialkombinationen ebenfalls denkbar, welche sich durch besondere Materialeigenschaften, wie Umweltverhalten bei Entsorgung, Kosten, Gewicht, Verarbeitbarkeit usw. eignen. Durch die Verwendung von mehreren Filterelementen in einer gemeinsamen Hülle kann die Durchflussrate bei gleich bleibendem Filtrationsdruck erhöht werden.

Die Hülle des erfindungsgemässen Filtermoduls kann etwa zylinderförmig sein. Durch die zylinderförmige Ausgestaltung wird ein optimales Volumen-Oberflächen-Verhältnis ermöglicht. Es sind jedoch auch andere Formen denkbar, insbesondere ellipsoid-, quaderförmig, rechteck-kubisch oder hexagonal. Eine quaderförmige, rechteck-kubische oder hexagonale Hülle erleichtert vor allem die Herstellung, da nur gerade Nähte zum Verschliessen der Hülle benötigt werden.

Weiter kann die Hülle stirnseitig über Anschlusselemente verfügen, welche zur Aufnahme in einem Positionierrahmen dienen. Solche Anschlusselemente können beispielsweise starre Gebilde sein, welche ein einfaches Positionieren und Fixieren in einem Positionierrahmen ermöglichen.

Die Hülle kann mehrteilig zusammengesetzt werden, beispielsweise durch tellerförmige Anschlusselemente, welche stirnseitig an einem zylinderförmigen Rohrelement beispielsweise durch Kleben, Schweissen, Schrauben, usw. befestigt sind. Dabei können die Anschlusselemente direkt ein zylinderförmiges Rohrstück aufweisen, so dass ein Zusammenfügen mit dem Rohrelement einfach möglich ist. Die Innenseite der Hülle muss im Bereich des Anschlusselementes nicht zwingend eben, sondern kann auch gewölbt oder anderweitig geformt sein, beispielsweise ähnlich einem Rundboden oder einem Klöpperboden.

In einer vorteilhaften Ausführungsform sind die Öffnungen in den Anschlusselementen angeordnet. Besonders vorteilhaft hat sich gezeigt, dass bei bestimmungsgemässer Verwendung die Öffnungen für Unfiltrat bzw. für Filtrat unten und eine Öffnung zur Entlüftung oben am Filtergehäuse bzw. an den Anschlusselementen angeordnet sind. Mit den Öffnungen können Verbindungselemente, insbesondere Flansche oder Verbindungsschläuche, fest verbunden sein. Über diese Verbindungselemente können vor- oder nachgelagerte Prozesselemente einfach angeschlossen werden.

Je nach Anwendung, beispielsweise für die Filtration von grossen Produktionslosen, hat es sich als vorteilhaft gezeigt, wenn die Filterelemente als Anschwemmfilter, vorzugsweise kombiniert mit Tiefenfilter, mit einem entsprechenden Anschwemmraum zum Aufbau eines Anschwemmfilterkuchens ausgebildet sind. Dieser Anschwemmraum kann dabei zwischen den einzelnen Filterelementen und/oder zwischen Filterelement und der Hülle angeordnet sein. Die Filterelemente sind so untereinander und von der umgebenden Hülle beabstandet, dass der Anschwemmraum jedes Filterelementes, welcher die Filterschicht in Richtung zum Unfiltratraum als Hüllkurve in einem Abstand umgibt, weder mit der Hülle, einem anderen Filterelement oder einem Anschwemmraum eines anderen Filterelementes in Kontakt kommt. Somit wird sichergestellt, dass auch bei maximal aufgebautem Anschwemmfilterkuchen die gesamte Oberfläche des Filterkuchens ausgenutzt und somit der Durchfluss durch das Filtermodul nicht verringert wird. Der Abstand der Hüllkurve von der Filterschicht, welcher gleichzeitig die maximale Dicke des Anschwemmfilterkuchens oder des Anschwemmraumes darstellt, liegt typischerweise zwischen 5mm und 100mm, insbesondere zwischen 10mm und 50mm und vorzugsweise zwischen 15mm und 25mm. Um eine optimale Filtrationsleistung gewährleisten zu können, wird zwischen den Anschwemmfilterkuchen untereinander und zur umschliessenden Hülle stets ein Freiraum von typischerweise 1mm bis 10mm, vorzugsweise von 1mm bis 5mm sichergestellt. Wird dieser Wert unterschritten, so dass sich die Filterkuchen gegenseitig berühren, so sinkt die Durchflussrate bei gleich bleibendem Betriebsdruck und die Filterelemente können durch eine ungleichmässige Druckbelastung deformiert werden. Damit sich die einzelnen Filterelemente durch das Eigengewicht bei voll ausgebautem Anschwemmkuchen nicht verformen, können diese untereinander, mittels vorzugsweise am Umfang angeordneten Distanzhaltern, fixiert werden.

Durch die Kombination aus Anschwemmfilter und Tiefenfilter beispielsweise durch das Aufbringen eines Anschwemmfilterkuchens auf ein Filterelement mit Tiefenfilter kann eine besonders gründliche Reinigungswirkung des Unfiltrats erreicht werden. Diese Kombination ist insbesondere interessant, wenn das Unfiltrat mit Trübstoffen von unterschiedlicher Grössenordnung belastet ist.

Die Filterelemente können im Filtergehäuse gestapelt und mit den Anschlusselementen bzw. über eine gemeinsame Filtratableitung untereinander fest verbunden sein. Durch die Stapelung kann der Raum im Innern der Hülle optimal ausgenutzt und das Filtrat kann durch eine einzige gemeinsame Filtratableitung abgeführt werden. Die Filterelemente können auch zu Filterelementgruppen zusammengefasst werden. Eine solche Filterelementgruppe verfügt über eine zentrale, allen Filterelementen gemeinsame Filtratableitung mit beidseitigen Adaptern, welche ein Stapeln der Filterelementgruppen ermöglichen. Somit wird eine gewisse Modularität bezüglich Filtrationsdurchlass in der Herstellung von Filtermodulen erreicht. Diese Adapter können so ausgestattet sein, dass sie bei der Herstellung des Filtermoduls direkt mit den Anschlusselementen der Hülle dicht verbunden werden können. Dabei wird vorzugsweise der untere Adapter der untersten Filterelementgruppe mit der Öffnung zum Ableiten des Filtrates verbunden. Der obere Adapter der obersten Filterelementgruppe muss dicht verschlossen werden, vorzugsweise direkt durch das obere Anschlusselement.

Weiter können die scheibenförmigen Filterelemente beidseitig, d.h. auf ihrer Ober- und Unterseite, eine Filterschicht aufweisen. Somit kann die Anzahl Filterelemente bei gleich bleibender Filterschichtoberfläche halbiert werden, was zu einer weiteren Materialreduktion führt. Handelt es sich dabei um Anschwemmfilter, so ist entsprechend beidseitig ein Anschwemmraum vorzusehen.

Es hat sich als vorteilhaft erwiesen, dass zum Erreichen einer gleichmässigen Verteilung des Unfiltrats, bzw. einer gleichmässigen Anschwemmung, zwischen der Unfiltratleitung und den Filterelementen ein Einlaufverteiler angeordnet werden kann. Dieser Einlaufverteiler kann tellerförmig und/oder radial geschlitzt ausgestaltet sein.

Zum Schutz der Filterelemente beim Transport kann, insbesondere bei einem Filtermodul mit flexibler Hülle, je eine Schutzscheibe zwischen dem Anschlusselement und dem ersten bzw. dem letzten Filterelement angeordnet sein. Dabei kann eine Schutzscheibe so ausgestaltet sein, dass diese gleichzeitig die Funktion des Einlaufverteilers übernehmen kann.

In einer Filtervorrichtung mit einem Filtermodul für den Einmalgebrauch mit einer verschlossenen Hülle als Filtergehäuse wird das Filtermodul in einem separaten, die Position, die Ausrichtung und die räumliche Grösse definierenden, Positionsrahmen, angeordnet oder eingesetzt. Dieser Positionierrahmen kann Vorrichtungen zur Aufnahme der Anschlusselemente aufweisen. Weiter kann der Positionierrahmen so ausgebildet sein, dass er eine Expansion einer dehnbaren Hülle eines Filtermoduls begrenzt. Der Positionsrahmen ist vorzugsweise aus Edelstahl gefertigt, wobei andere Materialien, beispielsweise Kunststoff, Aluminium oder Materialverbunde ebenfalls möglich sind. Der Positionierrahmen ist so gross ausgebildet, dass er das Filtermodul umschliesst, dabei variiert seine Grösse je nach verwendetem Filtermodul in der Höhe von 100mm bis 1000mm und im Innendurchmesser von 150mm bis 500mm. Für bestimmte Anwendungen sind sogar grössere Dimensionen denkbar. Der Innendurchmesser des Positionierrahmens ist maximal 50%, vorzugsweise zwischen 5% und 20% gösser als der Durchmesser der scheibenförmigen Filterelemente des Filtermoduls.

An Hand von Figuren, welche lediglich Ausführungsbeispiele darstellen, wird die Erfindung im Folgenden näher erläutert. Es zeigen:
- **Figur 1:**: einen Querschnitt durch ein Filtermodul für Anschwemmfiltration mit nur einem Filterelement;
- **Figur 2:**: das Filtermodul aus Figur 1 in einer perspektivischen Ansicht;
- **Figur 3a:**: einen Querschnitt durch ein Filtermodul mit mehreren Filterelementen;
- **Figur 3b:**: eine vergrösserte Darstellung eines Ausschnittes B gemäss Figur 3a;
- **Figur 3c:**: eine vergrösserte Darstellung eines Ausschnittes C gemäss Figur 3a;
- **Figur 4:**: eine perspektivische Ansicht eines Schnittes durch das Filtermodul gemäss Figur 3a;
- **Figur 5:**: einen Querschnitt durch ein Filtermodul für Anschwemmfiltration mit mehreren Filterelementen;
- **Figur 6:**: eine perspektivische Ansicht eines Schnittes durch ein Filtermodul gemäss Figur 5;
- **Figur 7:**: eine vergrösserte Darstellung eines Ausschnittes aus Figur 5;
- **Figur 8:**: den Ausschnitt gemäss Figur 7 mit angeschwemmtem Filterkuchen;
- **Figur 9:**: einen Querschnitt durch ein Filtermodul in einer anderen Ausführungsform;
- **Figur 10:**: eine perspektivische Ansicht eines Schnittes durch ein Filtermodul gemäss Figur 9;
- **Figur 11:**: eine perspektivische Ansicht einer Filtervorrichtung mit einen Positionierrahmen zur Aufnahme eines Filtermoduls;
- **Figur 12:**: eine Ansicht von Vorne einer Filtervorrichtung gemäss Figur 11;
- **Figur 13:**: eine perspektivische Ansicht eines Schnittes durch eine Filtervorrichtung gemäss Figur 12 entlang der Linie A-A;
- **Figur 14:**: einen Querschnitt durch eine Filtervorrichtung mit einen Positionierrahmen mit eingesetztem Filtermodul gemäss einer weiteren Ausführungsform;
- **Figur 15:**: eine perspektivische Ansicht einer Filtervorrichtung mit einen Positionierrahmen gemäss Figur 14;
- **Figur 16:**: eine perspektivische Ansicht eines Filtermoduls mit rechteck-kubischer Form;
- **Figur 17:**: eine perspektivische Ansicht eines Filtermoduls mit zylindrischer Form;
- **Figur 18:**: eine perspektivische Ansicht einer Filterelementgruppe;
- **Figur 19:**: einen Querschnitt durch eine weitere Ausführungsform eines Filtermoduls;
- **Figur 20:**: eine perspektivische Ansicht eines Schnittes durch ein Filtermodul gemäss Figur 18.

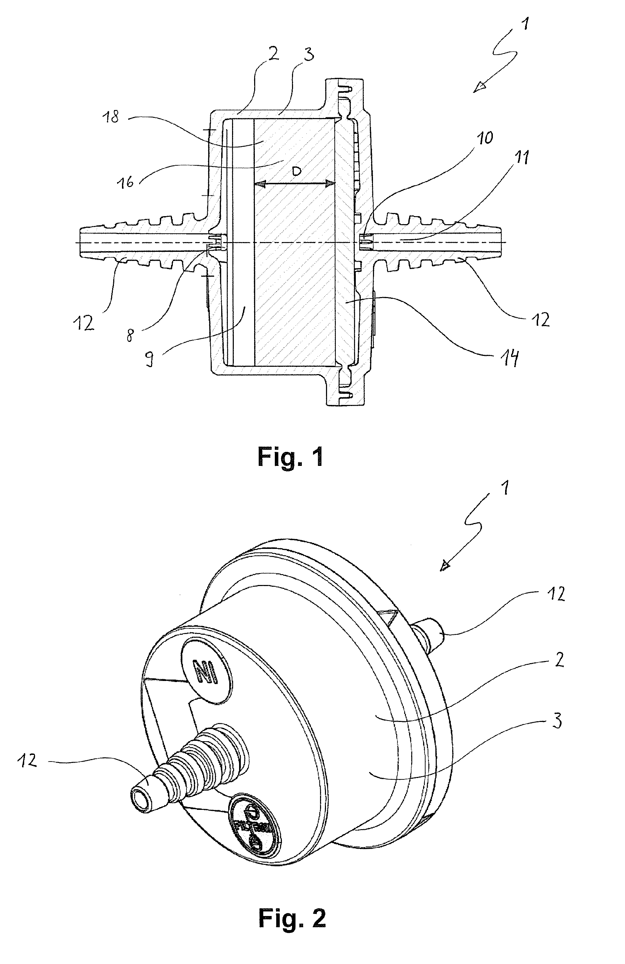

Die **Figuren 1 und 2** zeigen eine erste Ausführungsform eines erfindungsgemässen Filtermoduls 1. Das dargestellte Filtermodul 1 weist ein Filtergehäuse 2 in Form einer starren Hülle 3 auf. Durch die geeignete Wahl des Materials für die Hülle 3 kann diese starr, flexibel oder gar dehnbar ausgestaltet werden. Die Hülle 3 weist auf beiden Seiten je eine Öffnung 8, 10 mit einem entsprechendem Verbindungselement 12 zum Anschliessen beispielsweise eines Verbindungsschlauches auf. Die Hülle 3 des Filtermoduls 1 ist etwa zylinderförmig. Andere Ausgestaltungen, wie beispielsweise ellipsoid-, quaderförmig, rechteckig-kubisch oder hexagonal, sind jedoch denkbar. Im Innern der Hülle 3 befindet sich ein Filterelement 14, welches den Unfiltratraum 9 vom Filtratraum bzw. der Filtratableitung 11 trennt. Dadurch, dass das Filtermodul 1 nur ein Filterelement 14 aufweist und dass der Unfiltratraum 9 grösser als das Filterelement 14 ist, kann der ganze Unfiltratraum 9 als Anschwemmraum 16 dienen. Dieser Anschwemmraum 16 ist durch den Anschwemmfilterkuchen 18 mit Dicke D dargestellt. In der gezeigten Ausführung besteht die Hülle 3 des Filtermoduls 1 aus zwei Teilen. Dies ist besonders vorteilhaft wenn die Hülle 3 des Filtermoduls 1 aus Kunststoff, insbesondere durch Spritzgusstechnik hergestellt werden soll. Beim Zusammenfügen der beiden Teile kann das Filterelement 14 in seiner korrekten Position verklemmt werden. Die beiden Teile können beispielsweise durch Kleben, Reibschweissen, Ultraschallschweissen, Verschraubung, usw., zusammengefügt werden. Bei der dargestellten Ausführungsform handelt es sich um ein Anschwemmfilter. Andere Filtertypen, beispielsweise Tiefenfilter oder kombinierte Anschwemm-Tiefenfilter, sind jedoch auch möglich. Die Hülle des Filtermoduls besteht aus PE, andere Materialen sind jedoch denkbar. Das gezeigte Filtermodul weist einen Aussendurchmesser von 60mm auf, es sind jedoch Filtermodule mit einem Aussendurchmesser von 30mm bis 500mm oder grösser möglich.

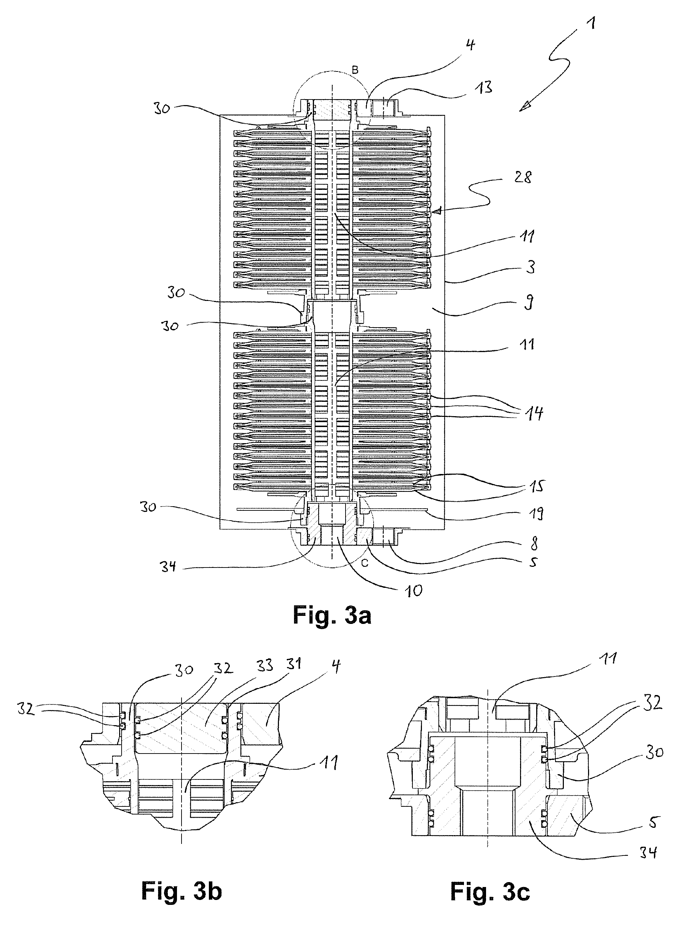

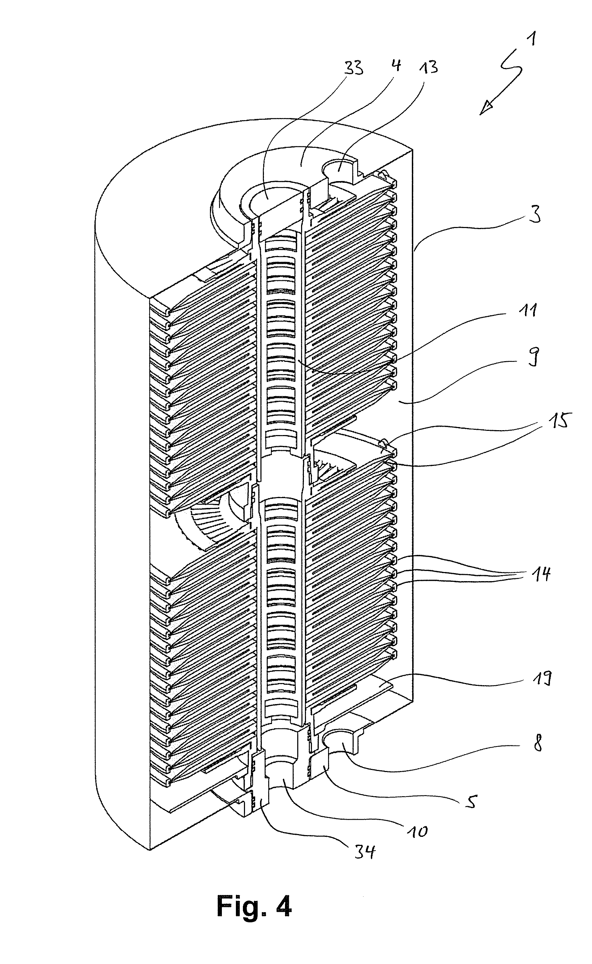

In den **Figuren 3a, 3b, 3c** **und** **4** ist eine zweite Ausführungsform eines erfindungsgemässen Filtermoduls 1 dargestellt. Das Filtermodul 1 weist eine in etwa zylinderförmige Hülle 3 auf. Die Hülle 3 verfügt stirnseitig über je ein Anschlusselement 4, 5. Im ersten Anschlusselement 4 ist eine Öffnung 13 zum Entlüften vorgesehen. Diese Öffnung 13 kann auch zum Anlegen eines Gasdruckes für die Restvolumenfiltration oder zum Einbringen von Unfiltrat verwendet werden. Das zweite Anschlusselement 5 verfügt über zwei Öffnungen 8, 10. Eine erste Öffnung 8 dient dem Einbringen von Unfiltrat in den Unfiltratraum 9 und eine zweite Öffnung 10 dem Ableiten des Filtrates. Beide Öffnungen 8, 10 können mit Verbindungselementen, beispielsweise einem Schlauch oder einem Flansch, zum Anschliessen an vor- oder nachgelagerte Prozesselemente fest verbunden sein. Im Innern der Hülle 3 sind mehrere Filterelemente 14 übereinander gestapelt und durch eine gemeinsame Filtratableitung 11 untereinander und mit der zweiten Öffnung 10 verbunden. Bei den Filterelementen 14 handelt es sich um bekannte scheibenförmige oder linsenförmige Filterelemente, welche beidseitig, also auf ihrer Ober- und Unterseite, über eine Filterschicht 15 verfügen. Im gezeigten Ausführungsbeispiel sind jeweils 16 Filterelemente 14 zu insgesamt zwei Filterelementgruppen 28 zusammengefasst, wobei die Filterelemente einer Gruppe jeweils eng, typischerweise mit einem Zwischenraum von ungefähr 1mm bis 5mm aufeinander gestapelt und unter einander abgestützt sind. Dabei werden die Filterelemente 14 durch die Filtratableitung 11 zu einer Filterelementgruppe 28 verbunden. Die Filtratableitung 11 kann an beiden Enden über je einen Adapter 30 verfügen, welche eine einfache dichte Verbindung mit der Filtratableitung 11 der nächsten Filterelementgruppe 28 und/oder den Anschlusselementen 4, 5 ermöglichen. Dabei sind die Adapter 30 jeweils als komplementäre Paare ausgestaltet, sodass ein Koppeln einfach und ohne zusätzliche Elemente, abgesehen von O-Ringen 32, möglich ist.

Eine mögliche Ausführungsform einer Verbindung der Filtratableitung 11 mit dem oberen Anschlusselement 4 ist in einem vergrösserten Ausschnitt aus Figur 3a in **Figur 3b** gezeigt. Dabei weist das Anschlusselement 4 im Wesentlichen eine zusätzliche Öffnung 31 auf in welches der Adapter 30 der Filtratableitung 11 eingesteckt werden kann. Neben der verwendeten Einstecktechnik sind auch Kleben, Reibschweissen, Ultraschallschweissen, Verschrauben, usw. möglich. Zusätzliche O-Ringe 32 stellen eine dichte Verbindung sicher. Die Filtratableitung 11 ist an ihrem oberen Ende durch einen Zapfen 33 verschlossen, welcher ebenfalls mit unterschiedlichen Methoden fixiert und mit zusätzlichen O-Ringen 32 abgedichtet werden kann.

In Figur 3c wird ein vergrösserter Ausschnitt aus Figur 3a des unteren Anschlusselementes 5 und der Verbindung mit dem Filtratablauf 11 gezeigt. Die Filtratableitung 11 ist dabei mit ihrem Adapter 30 auf eine Seite eines Anschlusszapfens 34 gesteckt und mittels O-Ringen 32 zusätzlich gedichtet. Der Anschlusszapfen 34 ist dabei im Wesentlichen rohrförmig ausgebildet, verfügt jedoch auf seiner Aussenseite über einen umlaufenden Vorsprung 35, welcher als Anschlag für den aufgesteckten Adapter 30 dient. Der Anschlusszapfen 34 steckt mit seiner zweiten Seite im Anschlusselement 5. Eine dichte Verbindung wird ebenfalls mit O-Ringen 32 gewährleistet. Der Vorsprung 35 dient auch hier als Anschlag beim Einstecken. Anstelle von Steckverbindungen sind auch Kleben, Reibschweissen, Ultraschallschweissen, Verschraubung, usw., denkbar. Der Anschlusszapfen 34 kann einstückig mit einem Verbindungselement zum Anschliessen an nachgelagerte Prozesselemente ausgestaltet sein.

Zur gleichmässigen Verteilung des Unfiltrats im Unfiltratraum 9 befindet sich über der ersten Öffnung 8 ein Einlaufverteiler 19. Dieser Einlaufverteiler 19 ist tellerförmig ausgestaltet und radial geschlitzt, kann aber auch andere Formen und Strukturen aufweisen. Der Durchmesser des Einlaufverteilers 19 entspricht in etwa dem Durchmesser der Filterelemente 14. Der Stapel der Filterelemente 14, bzw. der Filterelementgruppen 28 und der Einlaufverteiler 19 sind untereinander verbunden und beidseitig an den Anschlusselementen 4, 5 fixiert. Somit ergibt sich ein starres Gebilde aus Anschlusselementen 4, 5, Einlaufverteiler 19 und Stapel aus Filterelementen 14, bzw. Stapel aus Filterelementgruppen 28. Dieses starre Gebilde ist von der flexiblen Hülle 3, welche an den Anschlusselementen 4, 5 angeformt ist, umgeben. Alternative Formen, insbesondere mit fester Hülle 3, sind denkbar.

Beim gezeigten Ausführungsbeispiel ist die gesamte Hülle aus PE gefertigt, es sind aber auch andere Materialien denkbar. Der Durchmesser der Filterelemente beträgt 290mm, kann aber entsprechende der Anwendung auch zwischen 30mm und 500mm oder grösser gewählt werden. Die Hülle kann mehrteilig aufgebaut sein, so dass beispielsweise die Anschlusselemente in Spritzgusstechnologie und der zylinderförmige Teil der Hülle 3 mittels Schlauchextrusion hergestellt oder aus Flachmaterial formkonfektioniert werden können. Bei der Montage werden die Filterelementgruppen 28 aus Filtratableitung 11 und Filterelementen 14 zusammengesteckt und in die Anschlusselemente 4, 5 gesteckt. Dabei können die Einzelteile zusätzlich verschnappt, geschraubt, geklebt und/oder verschweisst werden. Als letzter Schritt wird die Hülle 3 beispielsweise durch verschweissen verschlossen. Alternative Herstellungsverfahren und Konfektionierungsmethoden sind ebenfalls möglich. Die Anzahl der Filterelemente 14 liegt zwischen 1 und 100, wobei vorzugsweise 10 bis 20 Filterelemente 14 zu Filterelementgruppen 28 zusammengefasst werden. Das gezeigte Ausführungsbeispiel weist zwei Gruppen mit je 16 Filterelementen auf.

Für die Filtration wird das Filtermodul 1 mit seiner ersten Öffnung 8 an ein vorgelagertes Prozesselement, beispielsweise einen pharmazeutischen Reaktor und mit seiner zweiten Öffnung 10 an ein nachfolgendes Prozesselement verbunden.

Beim Einströmen des zu filtrierenden Fluids in den Unfiltratraum 9 wird über die Öffnung 13 im ersten oder oberen Anschlusselement 4 der Unfiltratraum 9 entlüftet. Sobald die Luft aus dem Unfiltratraum verdrängt ist, wird die Öffnung 13 verschlossen. Das Fluid wird nun durch die Filterschichten 15 der Filterelemente 14 gepresst und verlässt das Filtermodul 1 durch die allen Filterelementen 14 gemeinsame Filtratableitung 11 und die Öffnung 10. Bei der Restvolumenfiltration kann der Unfiltratraum 9 durch die Öffnung 13 mit einem Gasdruck beaufschlagt werden, so dass der Unfiltratraum 9 normal über die Filterelemente 14 entleert werden kann.

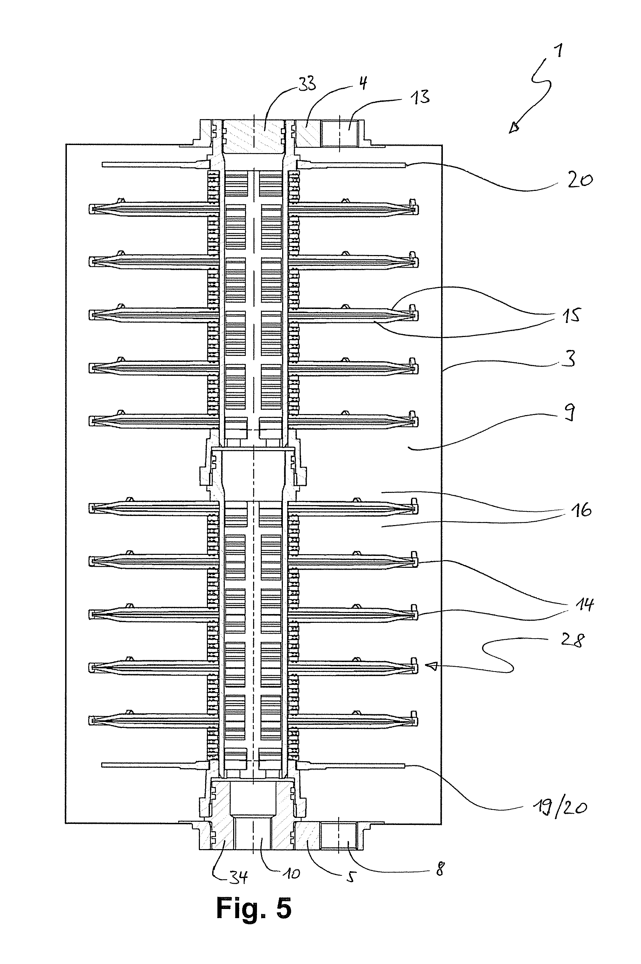

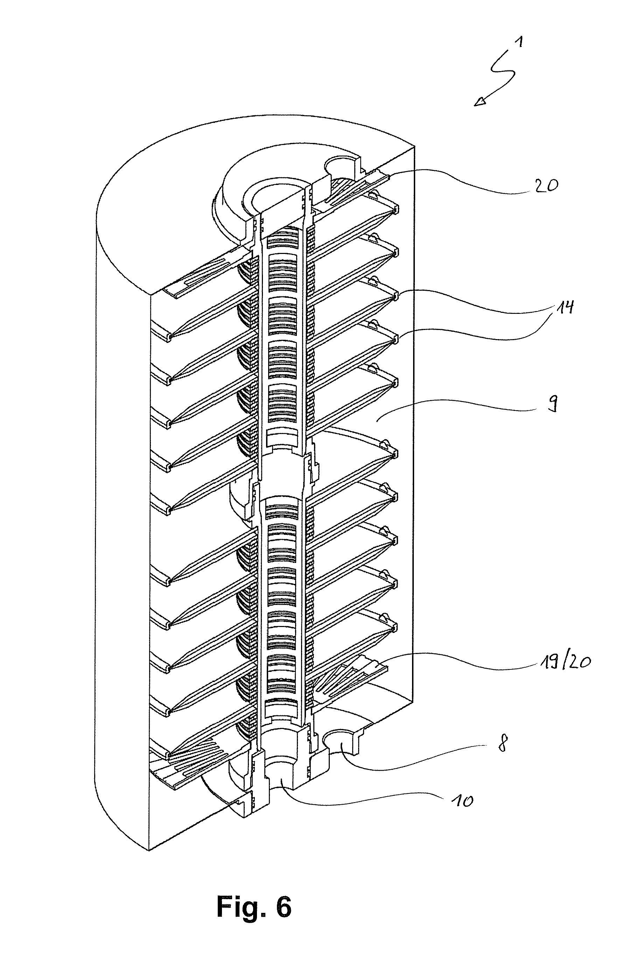

Die **Figuren 5** **und** **6** zeigen eine weitere Ausführungsform eines erfindungsgemässen Filtermoduls 1. Dieses Filtermodul 1 ist ähnlich aufgebaut wie dasjenige aus Figur 3 und 4. Bei den Filterelementen 14 handelt es sich jedoch um Anschwemm-Filterelemente welche über einen entsprechenden Anschwemmraum 16 jeweils zwischen den Filterelementen 14 verfügen. Die Filterelemente 14 müssen so untereinander und von der Hülle 3 beabstandet sein, dass der Anschwemmraum 16 jedes Filterelementes 14, welcher die Filterschicht 15 in Richtung zum Unfiltratraum 9 als Hüllkurve in einer Distanz D umgibt, nicht mit der Hülle 3, einem anderen Filterelement 14 oder einem Anschwemmraum 16 eines anderen Filterelementes 14 in Kontakt kommt. Dementsprechend können die Filterelemente 14 nicht so eng gestapelt werden wie im Ausführungsbeispiel gemäss Figuren 3 und 4. Somit wird die Filterfläche bei gleicher Modulgrösse in Ausführung als Anschwemmfilter entsprechend kleiner.

Das gezeigte Ausführungsbeispiel weist zwei Gruppen mit je 5 Filterelementen 14 auf. Die Anzahl der Filterelemente 14 kann zwischen 1 und 50 liegen, wobei vorzugsweise je 5 bis 10 Filterelemente 14 zu einer Filterelementgruppe 28 zusammengefasst werden. Die maximale Distanz D zwischen Filterschicht 15 und Hüllkurve, also die maximale Dicke des Anschwemmfilterkuchens 18 beträgt ungefähr 20mm, kann aber bei anderer Ausgestaltung des Filtermoduls und je nach Anwendung unterschiedlich sein.

Da in der dargestellten Ausführungsform die Hülle 3 des Filtermoduls 1 sehr dünn und flexibel ausgestaltet ist, kann beidseitig des Stapels der Filterelemente 14 je eine Schutzscheibe 20 angeordnet sein. Diese Schutzscheiben 20 sind tellerförmig ausgebildet und besitzen etwa die gleichen Dimensionen wie die Filterelemente 14. Die untere Schutzscheibe kann gleichzeitig die Funktion des Einlaufverteilers 19 einnehmen. Der Stapel der Filterelemente 14 und der Schutzscheiben 20 ist beidseitig mit den Anschlusselementen 4, 5 fest verbunden. Somit ergibt sich ein starres Gebilde aus Anschlusselementen 4, 5, Schutzscheiben 20 bzw. Einlaufverteiler 19 und dem Stapel aus Filterelementen 14. Dieses starre Gebilde ist von der flexiblen Hülle 3, welche an den Anschlusselementen 4, 5 angeformt ist, umgeben.

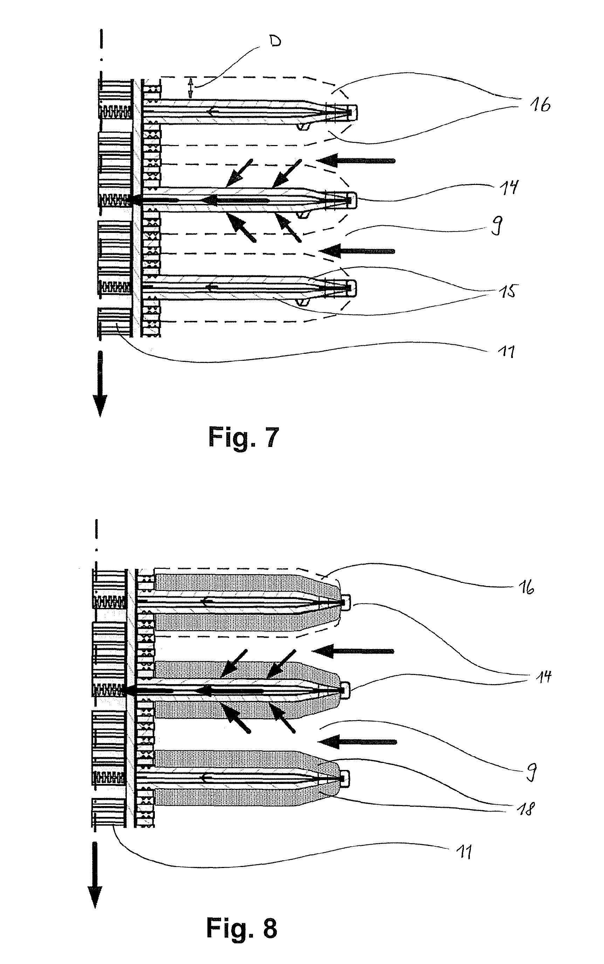

Die **Figuren 7 und 8** zeigen einen vergrösserten Ausschnitt aus Figur 5, wobei in Figur 7 die Filterelemente 14 ohne Anschwemmfilterkuchen gezeigt sind, während Figur 8 die Filterelemente 14 während der Filtration mit aufgebautem Anschwemmfilterkuchen 18 zeigt. Der Anschwemmraum 16 ist in Figur 7 durch die gestrichelten Linie dargestellt. Die Filterelemente 14 sind so untereinander und von der Hülle beabstandet, dass der Anschwemmraum 16 jedes Filterelementes 14, welcher die Filterschicht 15 in Richtung zum Unfiltratraum 9 als Hüllkurve in einer Distanz D umgibt, nicht mit der Hülle, einem anderen Filterelement 14 oder einem Anschwemmraum 16 eines anderen Filterelementes 14 in Kontakt kommt. Diese maximale Distanz D zwischen Filterschicht und Hüllkurve, beziehungsweise diese maximale Dicke des Anschwemmfilterkuchens 18 beträgt im gezeigten Ausführungsbeispiel 20 mm, kann jedoch je nach Anwendung auch anders dimensioniert sein. Idealerweise beträgt der Zwischenraum zwischen zwei benachbarten, komplett angeschwemmten Filterkuchen 18 zwischen 1mm und 5mm. Der Fluss des zu filtrierenden Unfiltrat ist durch die Pfeile dargestellt. Das Unfiltrat tritt aus dem Unfiltratraum 9 durch den Anschwemmfilterkuchen 18 in das Filterelement 14 ein und wird im Innern des Filterelements 14 zur Filtratableitung 11 geführt. Das Filtrat aus den einzelnen Filterelementen 14 wird in der Filtratableitung 11 gesammelt und zur entsprechenden Öffnung geführt. Die Filterelemente 14 verfügen beidseitig über einen angeschwemmten Filterkuchen 18.

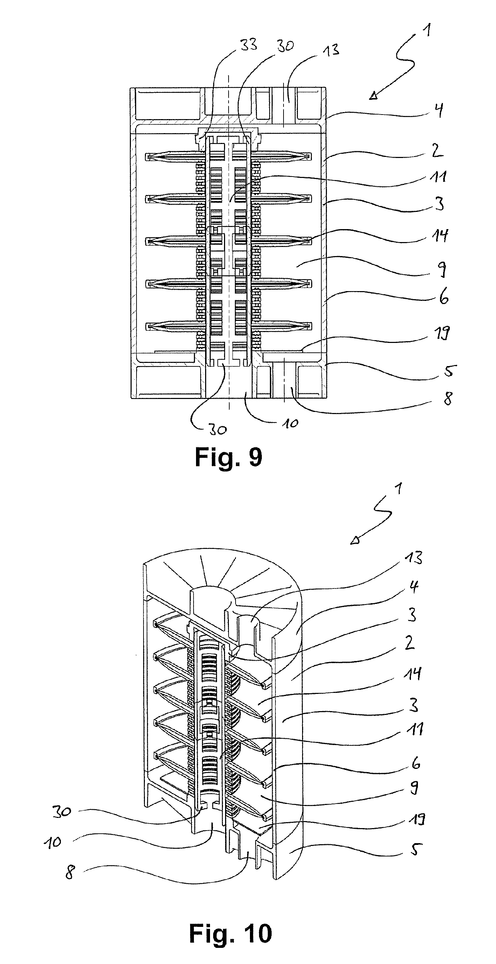

**Figur 9 und 10** zeigen eine weitere Ausführungsform eines erfindungsgemässen Filtermoduls 1. Hierbei handelt es sich wiederum um ein Anschwemmfilter. Das Filtermodul 1 verfügt über ein Filtergehäuse 2 mit einer festen Hülle 3, welche aus einem ersten Anschlusselement 4, einem zweiten Anschlusselement 5 und einem Mittelteil 6 zusammengesetzt ist. Die dreiteilige Hülle 3 kann beispielsweise durch Kleben oder Reibschweissen zusammengesetzt werden. Es sind auch andere Methoden, wie beispielsweise Ultraschallschweissen, Heizelementschweissen, Verschrauben, Verschnappen, usw., denkbar. Des Weiteren kann die Hülle 3 auch aus einer anderen Anzahl Teilen bestehen. Das zweite Anschlusselement 5 verfügt über eine Öffnung 8 zum Einbringen des Unfiltrats in den Unfiltratraum 9 sowie über eine zweite Öffnung 10 zum Ableiten des Filtrates. Das erste Anschlusselement 4 weist eine Öffnung 13 zum Entlüften und zur Druckbeaufschlagung für die Restvolumenfiltration auf. Das Mittelteil 6 ist in der dargestellten Ausführungsform ein zylindrisches Rohrelement mit einer Wandstärke von 5mm, welche entsprechend dem zu beaufschlagenden Druck von 1 bis 3 bar ausgelegt ist. Andere Betriebsdrücke zwischen 0.5 und 8 bar sind denkbar, die Wandstärke muss dabei aber entsprechend dem verwendeten Material und dem Druck angepasst werden, beispielsweise zwischen 2mm bis 20mm. Um die beiden Anschlusselemente 4, 5 mit dem Mittelteil 6 verbinden zu können, hat es sich als vorteilhaft gezeigt, dass die Anschlusselemente 4, 5 an ihrer Peripherie eine umlaufende flache Kontaktstelle aufweisen, welche stumpf mit dem zylindrischen rohrförmigen Ende des Mittelteils 6 zusammengefügt werden kann. Alternative Ausgestaltungsformen, wie beispielsweise Nut-Feder-Verbindungen, sind möglich. Bei den Filterelementen 14 handelt es sich um Anschwemmfilterelemente, welche einen entsprechenden Anschwemmraum 16 aufweisen. Im gezeigten Ausführungsbeispiel ist nur eine Filterelementgruppe 28 eingesetzt. Des Weiteren verfügt die Filtratableitung 11 an ihrem unteren Ende über einen Adapter 30, welcher ein einfaches Einstecken direkt in die Öffnung 10 des Anschlusselementes 5 erlaubt. Es sind keine Dichtungen vorgesehen. Der Adapter 30 am oberen Ende der Filtratableitung 11 wird von einem deckelförmigen Zapfen 33 direkt im Inneren der Hülle 3 verschlossen. Der Zapfen kann dabei fest mit dem Anschlusselement 4 verbunden sein, so dass die Filtratableitung 11 und damit auch die Filterelementgruppe 28 fixiert ist.

Beim gezeigten Ausführungsbeispiel ist die gesamte Hülle aus PE gefertigt, es sind aber auch andere Materialien denkbar. Der Durchmesser der Filterelemente beträgt 180mm, kann aber entsprechende der Anwendung auch zwischen 30mm und 500mm oder grösser gewählt werden. Bei der Montage wird die Filterelementgruppen 28 aus der Filtratableitung 11 und den Filterelementen 14 zusammengesteckt, mit dem Einlaufverteiler 19 bestückt und in die Anschlusselemente 4, 5 gesteckt. Dabei können die Einzelteile zusätzlich verschnappt, geschraubt, geklebt und/oder verschweisst werden. Als letzter Schritt wird die Hülle 3 beispielsweise durch verschweissen verschlossen. Alternative Konfektionierungsmethoden sind ebenfalls möglich. Die Anzahl der Filterelemente 14 beträgt beim gezeigten Ausführungsbeispiel fünf bei einer Filterelementgruppe 28.

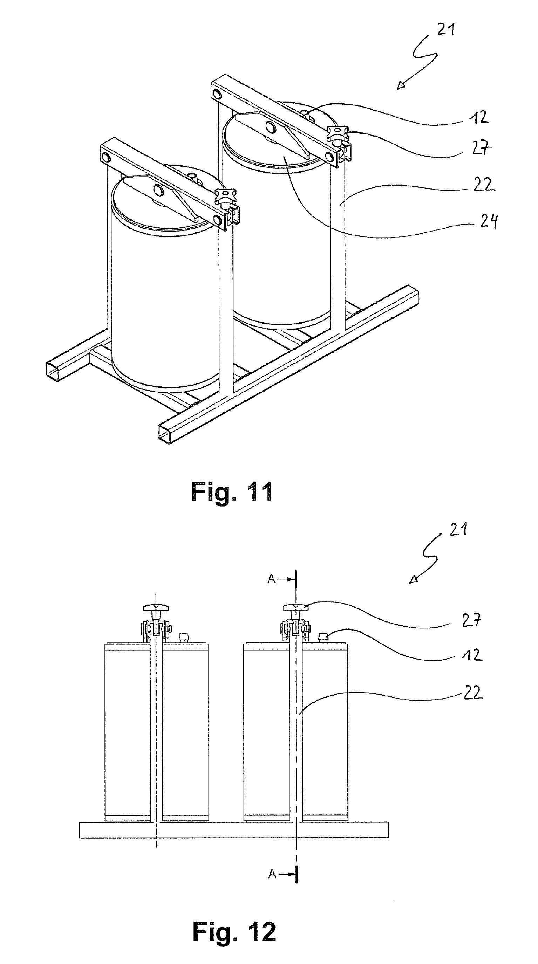

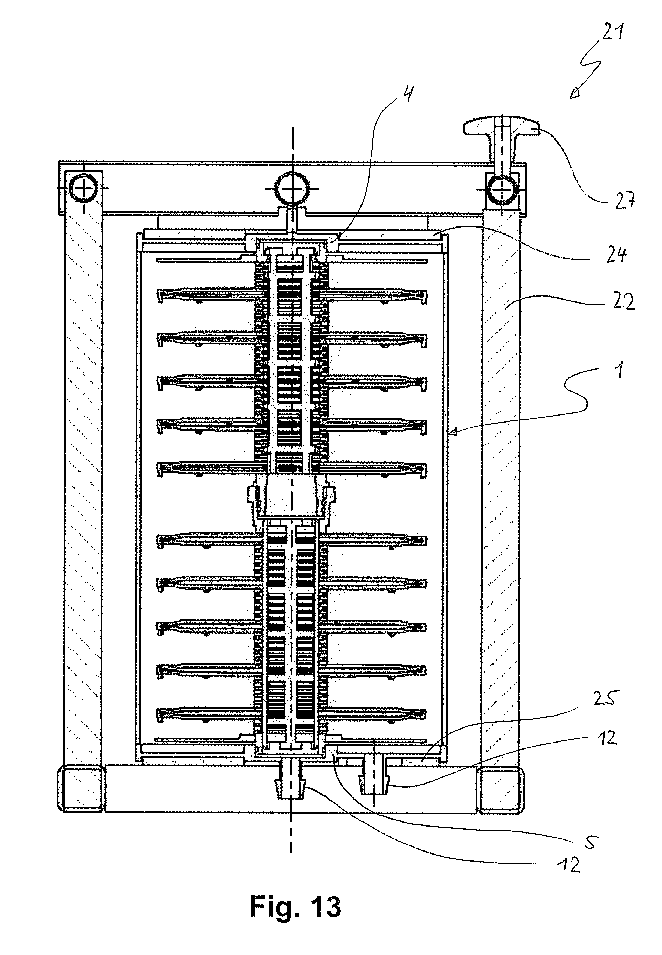

**Figuren 11, 12** **und** **13** zeigen eine Filtervorrichtung 21 mit zwei erfindungsgemässen Filtermodulen 1 mit fester Hülle aus Kunststoff in einem beispielhaften Positionierrahmen 22. Der hier gezeigte Positionierrahmen 22 besteht aus einem einfachen Rohrgestell mit einem verschliessbaren Deckel 24. Andere Ausführungsformen, insbesondere geschlossene Positionierrahmen, sind denkbar. Das Filtermodul 1 wird mit seinem zweiten Anschlusselement 5 auf die Bodenplatte 25 des Positionierrahmens 22 gestellt. Der Deckel 24 des Positionierrahmens 22 wird mit dem Verschlusselement 27 verschlossen, wobei die erste Anschlussplatte 4 vom Deckel 24 aufgenommen wird. Die Verbindungselemente 12 des Filtermoduls 1 ragen durch die Bodenplatte 25 bzw. den Deckel 24 nach aussen und sind frei zugänglich. Wenn wie beim gezeigten Filtermodul 1 nur der zylinderförmige Teil der Hülle druckstabil ist, so müssen die Flachböden mit ihren Anschlusselementen vom Positionsrahmen, insbesondere von dessen Deckel 24 und Bodenplatte 25, gehalten werden, um eine axiale Ausdehnung zu verhindern. Alternativ können aber auch komplett druckstabile Filtermodule eingesetzt werden.

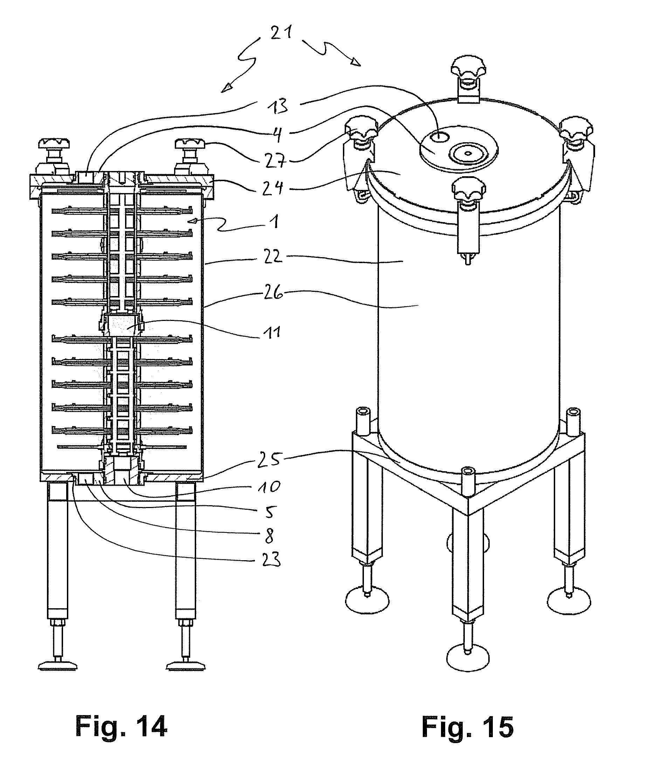

Die **Figuren 14 und 15** zeigen eine Filtervorrichtung 21 mit einer weiteren Ausführungsform eines Positionierrahmens 22 mit eingesetztem Filtermodul 1 mit flexibler Hülle 3. Der Positionierrahmen 22 besteht im Wesentlichen aus einem oben mit einem Deckel 24 zu verschliessenden Zylinder. Das Filtermodul 1 ist so in den Positionierrahmen 22 eingesetzt, dass das Anschlusselement 5 in der Bodenplatte 25 des Positionierrahmens 22 in die entsprechende Aufnahmevorrichtung 23 passt. Entsprechend wird der Deckel 24 des Positionierrahmens 22 so aufgesetzt, dass das erste Anschlusselement 4 in der vorgesehenen Aussparung des Deckels 24 platziert ist. Der Deckel 24 des Positionierrahmens 22 wird mit Verschlusselementen 27 verriegelt. Von oben ersichtlich liegt die Öffnung 13 zum Entlüften des Filtermoduls 1 und zur Druckbeaufschlagung für die Restvolumenfiltration frei. Im zweiten Anschlusselement 5 befinden sich die erste Öffnung 8 für den Unfiltrateinlauf, sowie die zweite Öffnung 10 für die Filtratableitung 11. Die Bodenplatte 25 weist einen entsprechenden Ausschnitt auf, so dass diese beiden Öffnungen 8, 10 frei zugänglich sind. Wenn an den Öffnungen 8, 10 Verbindungselemente 12 angeformt sind, beispielsweise Schlauchstücke, so ragen diese aus dem Positionierrahmen 22 heraus und können an vor- bzw. nachgelagerte Prozesselemente angeschlossen werden. Wenn das Filtermodul 1 mit einer flexiblen oder dehnbaren Hülle 3 ausgestattet ist, so dehnt sich dieses bei Druckbeaufschlagung aus. Die Grösse und der Innendurchmesser des Positionierrahmens 22 sind dabei so gewählt, dass die Hülle des Filtermoduls 1 nicht übermässig gedehnt wird und der Druck entsprechend von der Wand 26 des Positionierrahmens 22 aufgenommen wird. Insbesondere muss bei einer Abweichung von der zylindrischen Form der Hülle, wie beispielsweise ellipsoidisch, quaderförmig, rechteckig-kubisch oder hexagonal, besonders darauf geachtet werden, dass die Hülle nicht übermässig gedehnt wird, wenn sie sich unter der Druckbelastung an die Wand 26 des Positionierrahmens 21 anlegt. Es hat sich als vorteilhaft gezeigt, wenn der Innendurchmesser des Positionierrahmens 21 zwischen 5% und 20% grösser als der Durchmesser der scheibenförmigen Filterelemente ist. Damit der Positionierrahmen 21 der Druckbelastung standhält, beträgt die Stärke der Wand 26 des Positionierrahmens 21 je nach verwendetem Material und gewähltem Betriebsdruck zwischen 1mm und 20mm.

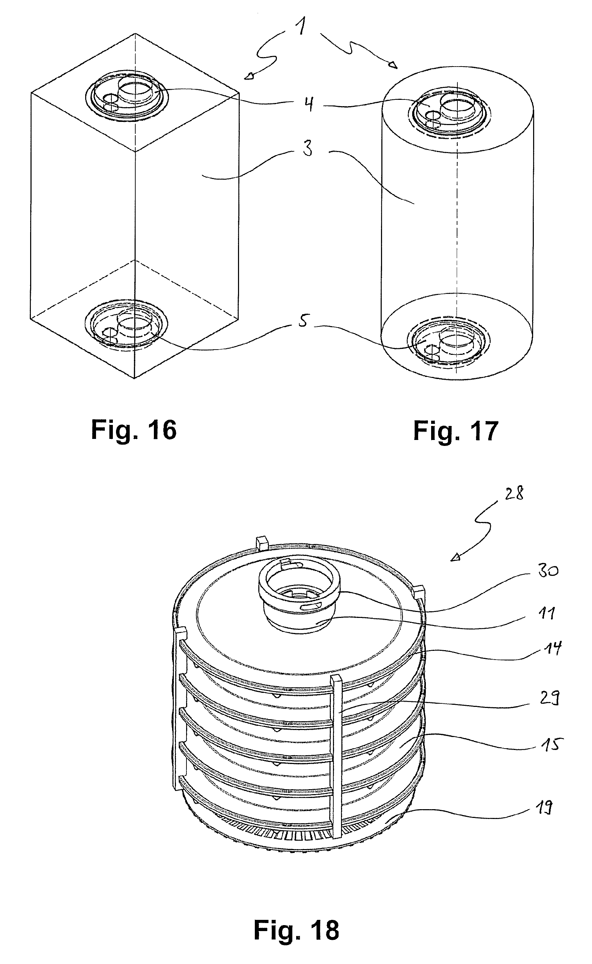

In **Figuren 16 und 17** werden beispielhaft verschiedene Ausführungsformen von Filtermodulen 1 mit flexibler Hülle 3 gezeigt. Figur 16 zeigt ein Filtermodul 1 mit einer rechteckig-kubischen Hülle 1 während in Figur 17 ein Filtermodul 1 mit zylindrischer Hülle 3 dargestellt ist. Die Anschlusselemente 4, 5 sind schematisch gezeichnet.

Die **Figur 18** zeigt eine Filterelementgruppe 28, wie sie beispielsweise in den Filtermodulen aus Figur 16 und 17 eingesetzt wird. Die einzelnen Filterelemente 14 sind mit dem zentralen Filtratablauf 11 verbunden, welcher beidseitig über einen Adapter 30 zum Anschliessen an eine weitere Filterelementgruppe oder an ein Anschlusselement verfügt. Am unteren Ende der gezeigten Filterelementgruppe 28 ist ein Einlaufverteiler 19 angebracht. Die einzelnen Filterelemente 14 sind untereinander zusätzlich über vier Distanzhalter 29 verbunden. Dieser Distanzhalter 29 verhindert insbesondere bei Filterelementen 14 mit beidseitiger Anschwemmung, dass sich die Filterelemente 14 verformen und sich die Anschwemmfilterkuchen berühren.

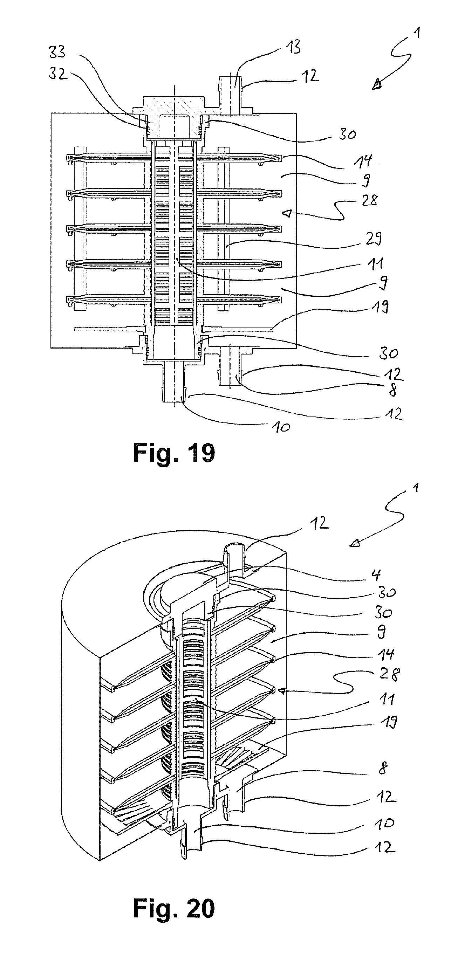

In den **Figuren 19 und 20** wird ein Filtermodul 1 mit einer Filterelementgruppe 28 gemäss Figur 18 gezeigt. Der Filtratablauf 11 ist mit seinem am oberen Ende angeformten Adapter 30 direkt auf einen am Anschlusselement 4 verbundenen Zapfen 33 aufgesteckt. Zwei O-Ringe 32 stellen einen dichten Abschluss sicher. Das Anschlusselement 4 verfügt ausserdem über eine Öffnung 13, welche zum Entlüften des Unfiltratraumes und zur Druckbeaufschlagung für die Restvolumenfiltration dient. Die einzelnen Filterelemente 14 sind durch vier Distanzhalter 29 und den gemeinsamen Filtratablauf 11 untereinander verbunden. Am unteren Ende des Filtratablaufs 11 ist eine Einlaufverteiler 19 befestigt und ein Adapter 30 zum Einstecken in die Öffnung 10 im Anschlusselement 5 ausgebildet. Das Anschlusselement 5 weist neben der Öffnung 10 zum Ableiten des Filtrates auch eine Öffnung 8 zum Einbringen des Unfiltrates in den Unfiltratraum 9 auf. An allen Öffnungen 8, 10, 13 ist ein Verbindungselement 12 in Form eines Anschlussstutzens angebracht, so dass das Filtermodul 1 in einfacher Weise mittels eines Schlauches an ein vor- oder nachfolgendes Prozesselement angeschlossen werden kann.

## Patentansprüche

1. Filtermodul (1) für den Einmalgebrauch mit einer verschlossenen Hülle (3) als Filtergehäuse (2), einem Unfiltratraum (9) innerhalb der verschlossenen Hülle (3) und mindestens einer ersten Öffnung (8) durch die Hülle (3) zum Unfiltratraum (9), mindestens einer zweiten Öffnung (10) zum Ableiten des Filtrates durch die Hülle (3) und einem oder mehreren in der Hülle (3) untergebrachten scheibenförmigen Filterelementen (14), deren Innenraum mit der zweiten Öffnung (10) verbundenen ist, **dadurch gekennzeichnet, dass** die Filterelemente (14) als Anschwemmfilter ausgebildet sind und einem Anschwemmraum (16) zwischen den einzelnen Filterelementen (14) und/oder der Hülle (3) zum Aufbau eines Anschwemmfilterkuchens (18) aufweisen.

2. Filtermodul (1) für den Einmalgebrauch gemäss Anspruch 1,
**dadurch gekennzeichnet, dass** die Hülle (3) wenigstens teilweise flexibel, vorzugsweise dehnbar ist.

3. Filtermodul (1) für den Einmalgebrauch mit einer verschlossenen Hülle (3) als Filtergehäuse (2), einem Unfiltratraum (9) innerhalb der verschlossenen Hülle (3) und mindestens einer ersten Öffnung (8) durch die Hülle (3) zum Unfiltratraum (9), mindestens einer zweiten Öffnung (10) zum Ableiten des Filtrates durch die Hülle (3) und mehreren in der Hülle (3) untergebrachten scheibenförmigen Filterelementen (14) deren Innenraum mit der zweiten Öffnung (10) verbundenen ist, **dadurch gekennzeichnet, dass** die Hülle (3) wenigstens teilweise flexibel, vorzugsweise dehnbar ist.

4. Filtermodul (1) für den Einmalgebrauch gemäss einem der Ansprüche 1 bis 3, **dadurch gekennzeichnet, dass** die Hülle (3) mindestens eine Kunststoffschicht, vorzugsweise aus der Gruppe PE, PP, PA, EVOH, PSU, PET, EVA, PC, PVdC, Polyolefin und PVC, aufweist, vorzugsweise daraus besteht.

5. Filtermodul (1) für den Einmalgebrauch gemäss einem der Ansprüche 1 bis 4, **dadurch gekennzeichnet, dass** die Hülle (3) eine Form bestehend aus der Gruppe zylinderförmig, ellipsiod, quaderförmig, rechteck-kubisch oder hexagonal aufweist.

6. Filtermodul (1) für den Einmalgebrauch gemäss einem der Ansprüche 1 bis 5, **dadurch gekennzeichnet, dass** die Hülle (3) wenigstens an einer Stirnseite Anschlusselemente (4, 5) zur Aufnahme in einem Positionierrahmen (22) aufweist.

7. Filtermodul (1) für den Einmalgebrauch gemäss einem der Ansprüche 1 bis 6, **dadurch gekennzeichnet, dass** die Öffnungen (8, 10) in den Anschlusselemente (4, 5) angeordnet sind.

8. Filtermodul (1) für den Einmalgebrauch gemäss einem der Ansprüche 1 bis 7, **dadurch gekennzeichnet, dass** bei bestimmungsgemässer Verwendung die Öffnungen (8, 10) für Unfiltrat bzw. Filtrat unten und eine Öffnung (13) für Luft oben am Filtergehäuse (2) angeordnet sind.

9. Filtermodul (1) für den Einmalgebrauch gemäss einem der Ansprüche 1 bis 8, **dadurch gekennzeichnet, dass** mit den Öffnungen (8, 10, 13) Verbindungselemente (12), insbesondere Flansche oder Verbindungsschläuche, fest verbunden sind.

10. Filtermodul (1) für den Einmalgebrauch gemäss einem der Ansprüche 3 bis 9, **dadurch gekennzeichnet, dass** die Filterelemente (14) Anschwemmfilter, vorzugsweise kombiniert mit Tiefenfilter sind und einen Anschwemmraum (16) zum Aufbau eines Anschwemmfilterkuchens (18) zwischen den einzelnen Filterelementen (14) aufweisen.

11. Filtermodul (1) für den Einmalgebrauch gemäss einem der Ansprüche 1 bis 10, **dadurch gekennzeichnet, dass** die Filterelemente (14) so untereinander und von der Hülle (3) beabstandet sind, dass der Anschwemmraum (16) jedes Filterelementes (14), welcher die Filterschicht (15) in Richtung zum Unfiltratraum (9) als Hüllkurve in einer Distanz (D) umgibt, nicht mit der Hülle (3), einem anderen Filterelement (14) oder einem Anschwemmraum (16) eines anderen Filterelementes (14) in Kontakt kommt.

12. Filtermodul (1) für den Einmalgebrauch gemäss Anspruch 11, **dadurch gekennzeichnet, dass** die Distanz (D) zwischen 5 und 100 mm, insbesondere zwischen 10 und 50 mm, vorzugsweise zwischen 15 und 25 mm beträgt.

13. Filtermodul (1) für den Einmalgebrauch gemäss einem der Ansprüche 6 bis 12, **dadurch gekennzeichnet, dass** die Filterelemente (14) im Filtergehäuse (2) gestapelt und mit den Anschlusselementen (4, 5) und über eine gemeinsame Filtratableitung (11) untereinander fest verbunden sind.

14. Filtermodul (1) für den Einmalgebrauch gemäss einem der Ansprüche 1 bis 13, **dadurch gekennzeichnet, dass** die Filterelemente (14) beidseitig als Anschwemmfilter ausgebildet sind und beidseitig einen Anschwemmraum (16) aufweisen.

15. Filtermodul (1) für den Einmalgebrauch gemäss einem der Ansprüche 1 bis 14, **dadurch gekennzeichnet, dass** zwischen der ersten Öffnung (8) zum Unfiltratraum (9) und den Filterelementen (14) ein Einlaufverteiler (19) angeordnet ist.

16. Filtermodul (1) für den Einmalgebrauch gemäss einem der Ansprüche 1 bis 15, **dadurch gekennzeichnet, dass** zwischen den Anschlusselementen (4, 5) und dem ersten bzw. letzten Filterelement (14) eine Schutzscheibe (20) zum Schutz der Filterelemente (14) beim Transport angeordnet ist.

17. Filtervorrichtung (21) mit einem Filtermodul (1) für den Einmalgebrauch mit einer verschlossenen Hülle (3) als Filtergehäuse (2), insbesondere nach einem der Ansprüche 1 bis 16, **dadurch gekennzeichnet, dass** das Filtermodul (1) in einem separaten, die Position, die Ausrichtung und die räumliche Grösse definierenden Positionierrahmen (22), vorzugsweise aus Edelstahl, eingesetzt ist.

18. Filtervorrichtung (21) nach Anspruch 17, **dadurch gekennzeichnet, dass** der Positionierrahmen (22) Vorrichtungen (23) zur Aufnahme der Anschlusselemente (4, 5) aufweist.

19. Filtervorrichtung (21) nach einem der Ansprüche 17 bis 18, **dadurch gekennzeichnet, dass** ein Innendurchmesser des Positionierrahmens (22) maximal 50%, vorzugsweise zwischen 5% und 20% gösser als der Durchmesser der scheibenförmigen Filterelemente (14) des Filtermoduls (1) ist.

20. Verwendung eines Filtermoduls (1) für den Einmalgebrauch in einer Filtervorrichtung (21), **dadurch gekennzeichnet, dass** das Filtermodul (1) in einem separaten, die Position, die Ausrichtung und die räumliche Grösse definierenden Positionierrahmen (22), vorzugsweise aus Edelstahl, eingesetzt wird.
